# EUROPÄISCHE PATENTSCHRIFT

(11) **EP 0 950 873 B1**
(45) Veröffentlichungstag und Bekanntmachung des Hinweises auf die Patenterteilung: **14.02.2007**
(21) Anmeldenummer: 99810024.2
(22) Anmeldetag: 15.01.1999
(51) Int. Cl.: G01B 11/26, G01C 5/02, G01C 15/00, G01C 5/00

(54) **Aufhängung für eine schwerkraftbeeinflusste Messeinrichtung**
Suspension for gravity actuated measuring devices
Suspension pour instruments mesureurs commandés par gravité

(30) Priorität: 11.03.1998 DE 19810447
(43) Veröffentlichungstag der Anmeldung: 20.10.1999
(73) Patentinhaber: HILTI Aktiengesellschaft, 9494 Schaan (LI)
(72) Erfinder: Kousek, Heinz, Dr., 6800 Feldkirch (AT); Waibel, Reinhard, Dr., 9442 Berneck (CH); Piske, Wilfried, Dipl.Ing., 9435 Heerbrugg (CH)
(74) Vertreter: Wildi, Roland

(56) Entgegenhaltungen:
- WO-A1-92/07290
- JP-A- 2 118 413
- JP-A- 59 178 632
- US-A- 5 287 627

## Beschreibung

Die Erfindung betrifft eine Aufhängung für eine schwerkraftbeeinflusste Messeinrichtung, beispielsweise für eine optische Anordnung, gemäss dem Oberbegriff des Patentanspruchs 1.

Bei vielen wissenschaftlichen und technischen Anwendungen spielt der Einfluss der Schwerkraft auf eine Messanordnung einen nicht unerhebliche Rolle. Vielfach wird die Wirkung der Schwerkraft direkt oder indirekt für die Lösung eines Messproblems herangezogen. Beispiele für derartige schwerkraftbeeinflusste Messeinrichtungen sind Neigungsmesser, Horizontgeber, Beschleunigungsmesser, Nivelliereinrichtungen u.v.a.m. Insbesondere ist es oftmals erforderlich, dass ein Messgerät, eine Anzeigevorrichtung, eine optische Anordnung oder dergleichen exakt horizontal und/oder vertikal ausgerichtet ist. Insbesondere optische Anordnungen zur Projektion von Markierungen über grössere Entfernungen stellen hohe Anforderungen an eine Nivelliereinrichtung, damit der Projektionsfehler über grössere Distanzen möglichst klein gehalten werden kann. Seit einiger Zeit kommen auch im Bauwesen und in der Haustechnik Geräte zur Anwendung, die optische Anordnungen beinhalten, beispielsweise um mit Hilfe eines Lichtstrahls, insbesondere eines Laserstrahls, über grössere Entfernungen Markierungen zu übertragen. Mit Hilfe einer im Gerät untergebrachten optischen Anordnung wird der Laserstrahl beispielsweise in zwei oder drei Teilstrahlen aufgespalten, die zueinander jeweils senkrecht verlaufen. Dadurch kann das Gerät zur Anzeige von rechten Winkeln und zur Darstellung von horizontal und/oder vertikal verlaufenden Markierungen eingesetzt werden.

Damit auch bei unebenen Standflächen ein exakt horizontaler und/oder vertikaler Verlauf des Laserstrahls gewährleistet ist, sind aus dem Stand der Technik verschiedene Lösungen bekannt, den Lichtstrahl manuell oder automatisch auszurichten. Eine der bekannten Lösungen besteht darin, eine innerhalb des Gerätegehäuses angeordnete Standplatte für die Lichtquelle und die optische Anordnung über Stellschrauben und Nivellieranzeigen, beispielsweise Libellen, manuell in der gewünschten Weise horizontal und/oder vertikal zu justieren. Diese Lösung ist konstruktiv relativ aufwendig; ausserdem ist die manuelle Justierung mühsam und oftmals nicht mit der gewünschten Genauigkeit durchführbar. Indem der Einstellvorgang automatisiert wird, beispielsweise durch das Vorsehen von Servomotoren, die mit der Nivellieranzeige gekoppelt sind, kann der Justiervorgang vereinfacht werden und ist eine hohe Einstellgenauigkeit erzielbar. Die Lösung ist jedoch mechanisch und elektronisch mit einem relativ grossen Aufwand verbunden und verteuert das Gerät. Da servogestützte Nivelliereinrichtungen ausserdem relativ viel Platz erfordern, werden sie meist nur bei Präzisionsgeräten grösserer Bauart, beispielsweise bei rotierenden Baulasern eingesetzt.

Aus der US-A-5,459,932 ist ein lasergestütztes Anzeigegerät bekannt, das wenigstens zwei im rechten Winkel zueinander verlaufende Laserstrahlenbündel erzeugt. Das Gerät wird zum Übertragen von horizontalen und/oder vertikalen Markierungen oder von rechten Winkeln verwendet. Mit Hilfe des Geräts können beispielsweise Komponenten exakt horizontal und/oder vertikal oder im rechten Winkel ausgerichtet und kontrolliert werden. Das Gerät weist eine relativ kompakte Bauweise auf. Die Nivelliereinrichtung zur horizontalen und/oder vertikalen Ausrichtung der Laserstrahlen ist durch die Gravitation unterstützt. Dazu sind die Laserlichtquelle und die optische Anordnung auf einer Plattform angeordnet, die nach Art eines Fadenpendels an einem vom Gerätegehäuse abgehängten Draht befestigt ist. Die pendelartige Aufhängung der Plattform weist zwei laterale Freiheitsgrade auf und kann dadurch allein durch die Wirkung der Schwerkraft Unebenheiten der Standfläche des Geräts ausgleichen. Die Dämpfung der pendelartig aufgehängten Plattform erfolgt beispielsweise magnetisch. Dazu wirken die Plattform bzw. an ihr angeordnete magnetisierbare Elemente mit in der Nachbarschaft der Plattform im Gerätegehäuse vorgesehenen Magneten zusammen. Um zu verhindern, dass die relativ spröde Drahtaufhängung bei schlagartigen Belastungen bricht, ist zwischen dem Aufhängepunkt des Drahtes im Gerätegehäuse und der Anbindung an die Plattform wenigstens ein Federelement angeordnet. Das beispielsweise als Schraubenfeder ausgebildete Federelement dämpft allfällige auf das Gerät einwirkende Schläge und verringert die Gefahr eines Bruchs der Drahtaufhängung. Das Federelement kann in Serie zur Drahtaufhängung vorgesehen sein; es kann auch an die Stelle der Drahtaufhängung treten. Zur Energieversorgung sind dünne Leitungsdrähte vorgesehen, über welche die Laserlichtquelle mit einer im Gerätegehäuse untergebrachten Energiequelle verbunden ist. Die Leitungsdrähte weisen zwar eine relativ geringe Masse auf und sind derart angeordnet, dass sie die pendelartige Aufhängung der Plattform möglichst wenig beeinflussen. Dennoch ergibt sich aus der Steifigkeit der Drahtaufhängung und der Masse der Leitungsdrähte ein Moment, welches verhindert, dass sich die Plattform exakt horizontal bzw. vertikal ausrichtet. Die geringfügige Fehllage wird durch optische Einrichtungen kompensiert.

Nach der US5287627 ist eine Aufhängung für eine schwerkraftbeeinflusste Messeinrichtung mit einer in wenigstens einer lateralen Richtung pendelartig schwingbar aufgehängten Trägerstruktur für eine optische Anordnung vorbekannt, wobei die Aufhängung ein Gelenk aufweist, das als Folienscharnier ausgebildet ist.

Aufgabe der vorliegenden Erfindung ist es, dieses bekannte Gerät dahingehend zu verbessern, dass die Stossempfindlichkeit der pendelartigen Aufhängung noch weiter verringert wird. Störende Schwingungsmoden, wie sie insbesondere bei Drahtaufhängungen auftreten können, sollen weitgehend vermieden werden. Die pendelartige Aufhängung der die Laserlichtquelle und die optische Anordnung tragenden Plattform soll derart modifiziert werden, dass die Voraussetzungen dafür geschaffen sind, den Momenteneinfluss der Leitungsdrähte auf die pendelartige Aufhängung noch weiter zu verringern. Dabei soll die pendelartige Aufhängung einfach und kostengünstig herstellbar sein.

Diese Aufgaben werden erfindungsgemäss durch eine Vorrichtung mit den im kennzeichnenden Abschnitt des Patentanspruchs 1 angeführten Merkmalen gelöst. Insbesondere wird durch die Erfindung eine Aufhängung für eine schwerkraftbeeinflusste Messeinrichtung mit einer in wenigstens einer lateralen Richtung pendelartig schwingbar aufgehängten Trägerstruktur für ein Messsystem und/oder eine optische Anordnung geschaffen, die wenigstens ein Gelenk aufweist, dass als Folienscharnier ausgebildet ist. Folienscharniere weisen infolge ihrer lateralen Ausdehnung gegenüber stossartigen Beanspruchungen eine grössere Festigkeit auf als eine im Querschnitt nahezu punktförmige, federpendelartige Draht- oder Fadenaufhängung. Durch die Ausbildung des Gelenks als Folienscharnier ergibt sich im Gelenk einen Biegebereich, der sich durch eine in einem eng definierten Längenbereich festgelegte lateral verlaufende Biegeachse auszeichnet. Hinsichtlich der verwendbaren Materialien besteht eine grössere Auswahl als es bei reinen Draht- oder Fadenaufhängungen der Fall ist. Folienscharniere weisen bei einer relativ grosser Festigkeit eine hohe Biegsamkeit und eine geringe Eigensteifigkeit auf. Durch eine gezielte Wahl der geometrischen Verhältnisse und der Materialien für das Folienscharnier ergibt sich ein praktisch richtkraftloses Scharniergelenk mit genügender Festigkeit.

Bei der Herstellung des Folienscharniers ist auch der Schwingungsdämpfungsaspekt bereits in einem gewissen Ausmass durch die geometrische Auslegung des Gelenkabschnitts berücksichtigbar. Dadurch kann ein zusätzlicher Dämpfungsmechanismus, der beispielsweise magnetischer Art sein kann, kleiner dimensioniert werden. Die Technologie zur Herstellung von Folienscharnieren ist kostengünstig und vielfach erprobt.

Der gelenkige Bereich der Aufhängung kann mit reproduzierbarer Steifigkeit vorfabriziert sein und muss nicht erst bei der Montage des Aufhängedrahtes erstellt werden, wobei es je nach der Montagequalität von Gelenk zu Gelenk zu verschieden grossen Steifigkeiten im Gelenk kommen kann. Indem das Scharniergelenk bereits als vorfabriziertes Bauteil vorliegt, kann es sehr einfach in ein Gerät eingebaut werden. Insbesondere eignet es sich dadurch auch für eine vollautomatische Montage, was die Herstellungs- und Montagekosten eines mit einer erfindungsgemässen Nivelliereinrichtung ausgestatteten Geräts noch weiter reduziert.

Die Aufhängung kann beispielsweise wenigstens im Gelenkbereich ein gummiartiges Material aufweisen. In einer bevorzugten Ausführungsvariante, die sich insbesondere gut für eine Massenherstellung der Aufhängung eignet, umfasst das Folienscharnier einen thermoplastischen Kunststoff bzw. einen Materialverbund, insbesondere einen Kunststoffverbund mit gummiähnlichen Eigenschaften. Beispielsweise können derartige Kunststoffe Polymerisate, wie Polyolefine, Polypropylen, Polyvinylverbindungen, oder auch Polykondensationsprodukte, wie z. B. Polyamid, und/oder deren Co-polymere sein. Im Gelenkbereich weist das aus einem thermoplastischen Kunststoff oder einem Materialverbund mit gummiähnlichen Eigenschaften bestehende Folienscharnier eine Wandstärke auf, die zwischen etwa 5 µm bis etwa 400 um beträgt. Die Längserstreckung des Gelenkbereichs bei derartigen Kunststoff-Folienscharnieren weist eine Längserstreckung auf, die kleiner ist als 3 mm.

Während das Folienscharnier beispielsweise einstückig spritzgegossen sein kann, besteht auch die Möglichkeit, das Folienscharnier mehrteilig auszubilden. ln diesem Fall ist ein bandartiger Abschnitt mit geringerer Wandstärke zu beiden Seiten des Gelenkbereichs von gleichartigen oder andersartigen Materialabschnitten umgeben, die als Aufhänge- bzw. Anbindungsbereiche innerhalb eines Geräts bzw. für die Trägerstruktur dienen.

In einer vorteilhaften Ausführungsvariante der Erfindung ist das Folienscharnier mit Leiterbahnen und/oder Leiterdrähten versehen, die zur Energieversorgung von auf der pendelnd aufgehängten Trägerstruktur angeordneten Einrichtungen und/oder als Signalleitungen dienen. Indem die Energiezuleitungen bzw. Signalleitungen mit dem Folienscharnier gekoppelt, vorzugsweise integriert, werden, können separate Leitungsdrähte, deren Momenteneinfluss die Nivellierungsfunktion beeinträchtigen könnte, entfallen. Dies hat den Vorteil, dass beispielsweise im Fall optischer Anordnungen aufwendige Kompensationseinrichtungen entfallen können.

Es erweist sich von Vorteil, wenn die Aufhängung zwei in Serie angeordnete Folienscharniere umfasst, deren Gelenkbereiche um 90° zueinander gedreht sind. Bei dieser Ausführungsvariante der Aufhängung sind die Folienscharniere nach Art eines Kardangelenks miteinander gekoppelt und werden beide lateralen Schwingungsmöglichkeiten durch die in Serie angeordneten Folienscharniere abgedeckt. Die beiden Folienscharniere können identisch ausgebildete Einzelscharniere sein, die um 90° zueinander verdreht zusammensteckbar sind. In einer Variante der Erfindung können die beiden Folienscharniere auch einstückig ausgebildet sein.

In einer weiteren vorteilhaften Ausführungsvariante der Erfindung umfasst die Aufhängung wenigstens zwei in Serie angeordnete Rahmenstrukturen, die über Folienscharniere gelenkig miteinander verbunden sind. Die Rahmenstrukturen sind gut innerhalb eines Gehäuses befestigbar bzw. bieten sie eine verhältnismässig grossflächige Anbindungsmöglichkeit für die Trägerstruktur. Ausserdem sind sie in vertikaler Richtung offen ausgebildet und bieten beispielsweise Platz für Durchführungen zu den auf der pendelnd aufgehängten Trägerstruktur angeordneten Messsystemen und/oder optischen Anordungen.

Für die Realisierung einer kardanischen Aufhängung sind drei in Serie angeordnete Rahmenstrukturen vorgesehen, wobei jeweils zwei benachbarte Rahmenstrukturen über Folienscharniere gelenkig miteinander verbunden sind. Die gelenkige Anbindung der ersten und zweiten Rahmenstruktur ist gegenüber der gelenkigen Verbindung der zweiten und dritten Rahmenstruktur um 90° gedreht angeordnet. Die gelenkig miteinander verbundenen Rahmenstrukturen sind mit Vorteil ein einstückiges Kunststoffteil, das mit Vorteil in einem Spritzgiessverfahren herstellbar ist.

Die erfindungsgemässe Aufhängung für eine schwerkraftbeeinflusste Messeinrichtung ist in einer Vielzahl von Anwendungen einsetzbar, bei denen der Einfluss der Schwerkraft für die Messung von Bedeutung ist. Besonders erwähnenswert sind dabei schwerkraftunterstützte Nivelliereinrichtungen, bei denen der Einfluss der Schwerkraft ausgenützt wird, um das Gerät bzw. seine Messvorrichtung im gewünschten Genauigkeitsumfang auszurichten. Eine besonders interessante Anwendung der erfindungsgemässen Aufhängung stellen Geräte dar, deren Nivelliereinrichtung für die horizontale und/oder vertikale Ausrichtung einer auf der pendelnd aufgehängten Trägerstruktur angeordneten Laserlichtquelle und ggf. damit in Verbindung stehender optischer Strahlteiler ausgebildet ist. Insbesondere wird in diesem Zusammenhang auf Mehrachsen-Laseranzeigegeräte hingewiesen, die wenigstens zwei im rechten Winkel zueinander verlaufende Laserstrahlenbündel emittierten und beispielsweise für die Markierung und Kontrolle der exakt horizontalen und/oder vertikalen Anordung von Bauteilen sowie für die Anzeige von rechten Winkeln einsetzbar sind.

Im folgenden wird die Erfindung unter Bezugnahme auf in den schematischen Zeichnungen dargestellte Ausführungsbeispiele näher erläutert. In den Zeichnungen ist die erfindungsgemässe Aufhängung für eine schwerkraftbeeinflusste Messeinrichtung am Beispiel der pendelnden Aufhängung der optischen Komponenten eines Mehrachsen-Laseranzeigegeräts dargestellt. Die Zeichnungen beschränken sich dabei auf die für das Verständnis der Erfindung erforderlichen Details, wobei aus Gründen der Verdeutlichung der erfindungsrelevanten Aspekte auf eine Massstabstreue verzichtet wurde. Es zeigen in schematischer Darstellung:
- Fig. 1: eine Sicht in das Gehäuseinnere eines Mehrachsen-Laseranzeigegeräts;
- Fig. 2: die Aufhängung der Nivelliereinrichtung aus Fig. 1 in vergrössertem Massstab;
- Fig. 3: eine Variante einer kardanischen Aufhängung; und
- Fig. 4: eine Aufhängung mit einem einfachen Folienscharnier.

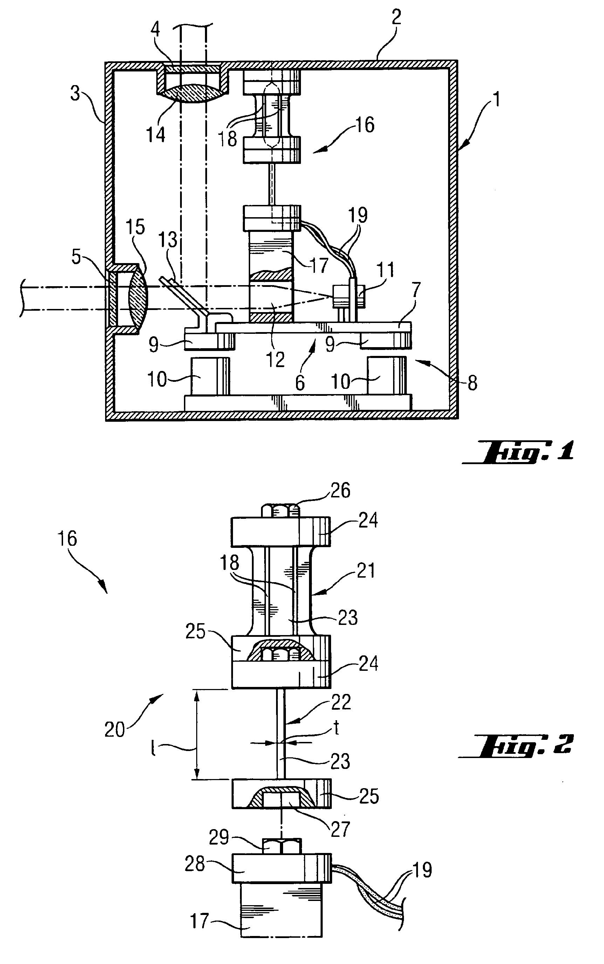

Fig. 1 zeigt ein geöffnetes Gehäuses 1 eines Mehrachsen-Laseranzeigegeräts. In der Decke 2 und in wenigstens einer der Seitenwände 3 des Gehäuses 1 sind Lichtaustrittsfenster 4 und 5 für senkrecht zueinander verlaufende Laserstrahlenbündel vorgesehen. Die Laserstrahlenbündel stammen von einer Laserlichtquelle 11, üblicherweise einer Laserdiode, deren Lichtstrahl nach dem Passieren einer Kollimationsoptik 12 von einem Strahlteiler 13 in die gewünschte Anzahl von Teilstrahlenbündel aufgespalten wird. Vor den Lichtaustrittsfenstern 4, 5 angeordnete Linsenanordnungen 14, 15 dienen der Korrektur einer allfälligen Divergenz der Teilstrahlenbündel. Die Laserdiode 11, die Kollimationsoptik 12 und der Strahlteiler 13 sind auf einer Nivelliereinrichtung 6 angeordnet, die von einer Plattform 7 gebildet ist, die frei pendelnd von der Decke 2 des Geäuses 1 abgehängt ist. Dazu ist die Plattform 7 über eine Anschlussstrebe 17 mit einer Aufhängung 16 verbunden, die zwei um 90° zueinander gedrehte Gelenkbereiche aufweist. Die im Gehäuse 1 frei pendelnd aufgehängte Nivelliereinrichtung 6 gleicht Unebenheiten der Stellfläche aus. Eine Dämpfungseinrichtung 8 gewährleistet eine Bremsung der Pendelbewegung der Nivelliereinrichtung 6 und verhindert ein Schwingen der emittierten Laserstrahlenbündel um ihre Sollage. Die Dämpfungseinrichtung 8 umfasst beispielsweise magnetisierbare Elemente 9 an der Unterseite der Plattform 7, die mit Permanentmagneten 10 zusammenwirken, die am Boden des Gehäuses 1 angeordnet sind.

Die Laserdiode 11 wird von einer nicht dargestellten Energiequelle, üblicherweise einer Batterie oder einem Akkumulator, mit Energie versorgt. Wie in Fig. 1 angedeutet ist, sind dazu Leiterbahnen oder Leiterdrähte 18 in die Aufhängung 16 integriert. Die integrierten Leiterbahnen oder Leiterdrähte 18 sind im Deckenbereich des Gehäuses 1 mit der Energiequelle verbunden. Im Anbindungsbereich der Aufhängung 16 und der Anschlussstrebe 17 der Plattform 7 sind sie an Zuleitungen 19 angeschlossen, die zur Laserdiode 11 führen. Die in die Aufhängung 16 integrierten Leiterbahnen bzw. Leiterdrähte 18 ersetzen separate Zuleitungsdrähte, deren Momenteneinfluss die Nivellierung beeinflussen könnte. Die von den Leiterbahnen zur Laserdiode führenden Zuleitungen 19 bilden einen integralen Bestandteil der Nivelliereinrichtung 6 und haben keinen Einfluss auf die Pendelbewegung bei der schwerkraftbeeinflussten Nivellierung.

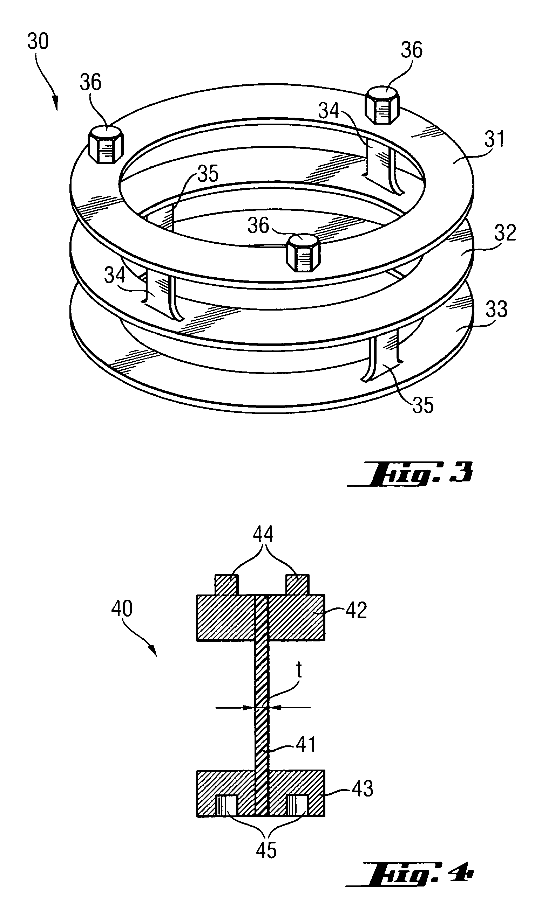

Fig. 2 zeigt die Aufhängung 16 aus Fig. 1 in vergrösserter Darstellung. Dabei ist ersichtlich, dass es sich um eine kardanische Aufhängung 20 handelt, die von zwei in Serie angeordneten Folienscharnieren 21, 22, beispielsweise Filmscharnieren, gebildet ist. Die Folienscharniere 21, 22 weisen Gelenkbereiche 23 auf, die um 90° gegeneinander verdreht sind. Im Gelenkbereich 23 weisen die Folienscharniere 21, 22 eine Wandstärke t auf, die etwa 5 µm bis etwa 400 µm beträgt. Die Längserstreckung I des Gelenkbereichs 23 ist kleiner als 3 mm. Es versteht sich, dass der Gelenkbereich 23 stets eine von Null verschiedene Längserstreckung I aufweisen muss. Selbst bei einem als etwa V-förmige Kerbe in einem bandartigen Material ausgebildeten Gelenkbereich weist das Scharniergelenk im Gelenkbereich eine lateral verlaufende Biegeachse auf, die einen Querschnitt besitzt, der grösser als Null ist.

Oberhalb und unterhalb eines Gelenkbereichs 23 sind Endabschnitte 24, 25 vorgesehen. Die Endabschnitte sind mit Kupplungsteilen versehen, die beispielsweise einen Anschlusszapfen 26 und eine Einsteckbohrung 27 umfassen. Das kardanische Gelenk mit zwei um 90° gegeneinander verdrehten Gelenkbereichen 23 kann einstückig ausgebildet sein, beispielsweise in einem Spritzgiessverfahren gefertigt sein. Bei dem dargestellten Ausführungsbeispiel ist die Aufhängung mehrteilig ausgebildet und umfasst zwei identisch ausgebildete Folienscharniere, die um 90° verdreht über die Kupplungsteile 26, 27 miteinander verbunden sind. Die Herstellung der Folienscharniere 21, 22 kann beispielsweise in einem Spritzgiessverfahren erfolgen. Der Anschlusszapfen 26 am oberen Endabschnitt des oberen Folienscharniers 21 dient zur Befestigung der Aufhängung 16 an der Decke des Gehäuses, die zu diesem Zweck mit einer korrespondierenden Einsteckbohrung versehen ist. Die Einsteckbohrung 27 am unteren Endabschnitt 25 des unteren Folienscharniers 22 dient als Kupplungsteil für einen Kupplungszapfen 29, der von einem Anschlussteil 28 an der Anschlussstrebe 17 abragt.

Wie aus Fig. 2 ersichtlich ist, sind am Folienscharnier Leiterbahnen bzw. Leiterdrähte 18 integriert. Indem sich die Leiterbahnen bzw. Leiterdrähte 18 auch in den Kupplungsbereichen 26, 27 erstrecken, erfolgt beim Kuppeln der einzelnen Folienscharniere 21, 22 auch eine elektrische Verbindung. Beim Einstecken des Anschlusszapfens 26 in das korrespondierende Kupplungsteil an der Decke 2 des Gehäuses wird eine leitende Verbindung zur Energiequelle erstellt. Die Laserdiode wird schliesslich über die bei 19 angedeuteten Zuleitungen mit Energie versorgt. Dazu ist auch der Kupplungszapfen 29 mit Kontaktierungen versehen, die beim Einstecken in die Einsteckbohrung 27 des unteren Folienscharniers 22 eine leitende Verbindung erstellt. Die Verbindung der Kontaktierungen des Kupplungszapfens 29 mit den Zuleitungen 19 ist in das Anschlussteil 28 eingebettet und muss nicht näher erläutert werden.

In Fig. 3 ist eine Variante eines kardanischen Gelenks dargestellt und gesamthaft mit dem Bezugszeichen 30 versehen. Das Gelenk 30 umfasst drei Rahmenstrukturen 31, 32, 33, die beispielsweise kreisringförmig ausgebildet sind. Jeweils zwei benachbarte Rahmenstrukturen 31, 32 bzw. 32, 33 sind über Folienscharniere 34 bzw. 35 gelenkig miteinander verbunden. Die Anordnung der Folienscharniere 34, 35 ist derart gewählt, dass die Gelenke gegeneinander um 90° verdreht sind. An der Oberseite der obersten Rahmenstruktur 32 ragen beispielsweise Anschlusszapfen 36 ab, die in korrespondierend ausgebildete Einsteckbohrungen eines Anschlussteils an der Decke des Gerätegehäusees ankuppelbar sind. An der Unterseite der untersten Rahmenstruktur 33 sind nicht näher dargestellte Kupplungsteile vorgesehen, die mit entsprechend ausgebildeten Kupplungsgegenstücken am Anschlussteil der Anschlussstrebe der Plattform verbindbar sind. Beispielsweise können die Kupplungsteile an der Unterseite der unteren Rahmenstruktur gleichfalls abragende Anschlusszapfen sein, die an korrespondierende Einsteckbohrungen am Anschlussteil ankuppelbar sind. In seiner Funktion entspricht dieses modifizierte kardanische Gelenk 30 der Aufhängung 16 aus Fig. 1 und 2.

Fig. 4 zeigt ein einzelnes Folienscharnier, das gesamthaft mit 40 bezeichnet ist. Das Folienscharnier 40 ist mehrteilig aufgebaut und weist einen bandartigen Abschnitt 41 auf, der an beiden Enden von gleichartigen oder andersartigen Materialabschnitten 42 bzw. 43 umgeben ist. Der ausgesparte Abschnitt des Bandes weist eine Wandstärke t auf, die etwa 5 µm bis etwa 400 µm beträgt, und bildet den Gelenkbereich. Die Länge des Gelenkbereichs ist bei thermoplastischen Kunststoffbändern mit gummiähnlichen Eigenschaften üblicherweise kleiner als 3 mm. Für den Fall, dass das eingespannte Materialband ein Gummiband ist, kann die Länge des Gelenkbereichs auch grösser gewählt sein und beispielsweise bis 8 mm betragen. Die Materialabschnitte 42 und 43 dienen zur Verbindung mit dem Gehäuse oder mit einem weiteren Folienscharnier und zur Anbindung an den Anschlusssteg der Plattform. Dazu sind beispielsweise am oberen Materialabschnitt Anschlusszapfen 44 und am unteren Materialabschnitt Einsteckbohrungen 45 vorgesehen.

Die erfindungsgemässe Aufhängung mit Gelenken aus Folienscharnieren ist einfach im Aufbau und ist in einem Massenfertigungsprozess herstellbar. Die Folienscharniere können fertig vorfabriziert werden und müssen nur noch zusammengesteckt werden. Dabei erweist es sich insbesondere von Vorteil, dass die Folienscharniere aus einem Einzelstoff, insbesondere aus einem thermoplastischen Kunststoff, oder aus einem Stoffverbund, beispielsweise einem Verbund verschiedener Kunststoffe oder aus einem Kunststoff-Metallfolien-Verbund der gewünschten Eigenschaften, herstellbar sind. Der Montagevorgang ist durch die bausteinartige Geometrie der Folienscharniere und insbesondere der Kupplungsteile stark vereinfacht. Der Gelenkbereich liegt bereits fertig vor und muss nicht erst bei der Montage der Aufhängung hergestellt werden. Als Materialien für die Folienscharniere eignen sich insbesondere Polymerisate, wie Polyolefine, Polypropylen, Polyvinylverbindungen, oder auch Polykondensationsprodukte, wie z. B. Polyamid, und/oder deren Co-polymere.

## Patentansprüche

1. Aufhängung für eine schwerkraftbeeinflusste Messeinrichtung (6) mit einer in wenigstens einer lateralen Richtung pendelartig schwingbar aufgehängten Trägerstruktur (7) für ein Messsystem und/oder eine optische Anordnung, wobei die Aufhängung (16) wenigstens ein Gelenk aufweist, das als Folienscharnier (21; 40) ausgebildet ist,
**dadurch gekennzeichnet, dass** das Folienscharnier (21; 40) einen thermoplastischen Kunststoff bzw. einen einen Kunststoffverbund mit gummiähnlichen Eigenschaften, umfasst, wobei das Folienscharnier (21; 40) im Gelenkbereich (23; 41) eine Wandstärke (t) aufweist, die zwischen etwa 5 µm bis etwa 400 µm beträgt, und der Gelenkbereich (23; 41) des Folienscharniers (21; 40) eine Längserstreckung (I) aufweist, die kleiner ist als 3 mm.

2. Aufhängung nach Anspruch 1, **dadurch gekennzeichnet, dass** das Folienscharnier (40) mehrteilig aufgebaut ist, wobei ein bandartiger Abschnitt (41) mit geringerer Wandstärke (t) zu beiden Seiten des Gelenkbereichs von gleichartigen oder andersartigen Materialabschnitten (42, 43) umgeben ist, die als Aufhänge- bzw. Anbindungsbereiche dienen.

3. Aufhängung nach einem der vorangehenden Ansprüche, **dadurch gekennzeichnet, dass** das Folienscharnier (21) mit Leiterbahnen und/oder Leiterdrähten (18) versehen ist, die zur Energieversorgung von auf der pendelnd aufgehängten Trägerstruktur (7) angeordneten Einrichtungen und/oder als Signalleitungen dienen.

4. Aufhängung nach einem der vorangehenden Ansprüche, **dadurch gekennzeichnet, dass** sie zwei in Serie angeordnete Folienscharniere (21, 22) umfasst, deren Gelenkbereiche (23) um 90° zueinander gedreht sind.

5. Aufhängung nach Anspruch 4, **dadurch gekennzeichnet, dass** die zwei in Serie angeordneten Folienscharniere einstückig ausgebildet sind.

6. Aufhängung nach Anspruch 1 **dadurch gekennzeichnet, dass** sie wenigstens zwei in Serie angeordnete Rahmenstrukturen umfasst, die über wenigstens ein Folienscharnier gelenkig miteinander verbunden sind.

7. Aufhängung nach Anspruch 6, **dadurch gekennzeichnet, dass** sie drei in Serie angeordnete Rahmenstrukturen (31, 32, 33) umfasst, wobei jeweils zwei benachbarte Rahmenstrukturen (31, 32 bzw. 32, 33) über Folienscharniere (34, bzw. 35) gelenkig miteinander verbunden sind und die gelenkige Anbindung (34) der ersten und zweiten Rahmenstruktur (31, 32) gegenüber der gelenkigen Verbindung (35) der zweiten und dritten Rahmenstruktur (32, 33) um 90° gedreht angeordnet ist.

8. Aufhängung nach Anspruch 6 oder 7, **dadurch gekennzeichnet, dass** die gelenkig miteinander verbundenen Rahmenstrukturen (31, 32, 33, 34, 35) aus einem Kunststoffteil geformt, vorzugsweise spritzgegossen, sind.

9. Aufhängung nach einem der vorangehenden Ansprüche, **dadurch gekennzeichnet, dass** sie Bestandteil einer Nivellliereinrichtung für eine Mehrachsen-Laseranzeigevorrichtung ist, die wenigstens zwei im rechten Winkel zueinander verlaufende Laserstrahlenbündel emittiert, wobei die auf der pendelnd aufgehängten Trägerstruktur (7) angeordneten Einrichtungen eine Laserlichtquelle (11) und optische Strahlteiler (13) umfassen.

## Claims

1. A suspension for a gravity-actuated measuring device (6) with a supporting structure (7) that can be pivotably suspended in pendulum fashion in at least one lateral direction, for a measuring system and/or an optical device, wherein the suspension (16) exhibits at least one joint which is designed as a film hinge (21; 40), **characterised in that** the film hinge (21; 40) comprises a thermoplastic or a plastic compound with rubber-like properties, wherein the film hinge (21; 40) exhibits in the joint region (23; 41) a wall thickness t) which is between approximately 5 µm to approximately 400 µm, and wherein the joint region (23; 41) of the film hinge (21; 40) exhibits a longitudinal extension (I) which is smaller than 3 mm.

2. The suspension according to Claim 1, **characterised in that** the film hinge (40) is constructed of several parts, wherein a strip-like section(41) with a small wall thickness (t) is surrounded by material sections (42, 43) of the same or different types on both sides of the joint region, which sections serve as suspension or connection regions.

3. The suspension according to one of the preceding claims, **characterised in that** the film hinge (21) is provided with circuit paths and/or conductor wires (18) which serve to supply power from devices arranged on the supporting structure (7) suspended in pendulum fashion and/or as signal cables.

4. The suspension according to one of the preceding claims, **characterised in that** it comprises two film hinges (21, 22) arranged in series, the joint regions (23) of which hinges are rotated 90° relative to each other.

5. The suspension according to Claim 4, **characterised in that** the two film hinges arranged in series are designed in one piece.

6. The suspension according to Claim 1, **characterised in that** it comprises at last two frame structures arranged in series, which are connected in articulated fashion to each other by at least one film hinge.

7. the suspension according to Claim 6, **characterised in that** comprises three frame structures (31, 32; 33) arranged in series, wherein two adjacent frame structures (31, 32 and 32, 33 respectively) are connected in articulated fashion to each other by film hinges (34 and 35 respectively), and the articulated connection (34) of the first and second frame structure (31, 32) is arranged so that it is rotated 90° relative to the articulated connection (35) of the second and third frame structure (32, 33).

8. The suspension according to Claim 6 or 7, **characterised in that** the frame structures (31, 32, 33, 34, 35) connected to each other in articulated fashion are formed from a plastic part, preferably injection moulded.

9. The suspension according to one of the preceding claims, **characterised in that** it forms part of a levelling device for a multi-axis laser indicating device which emits at least two laser beam bundles running at right angles to each other, wherein the devices arranged on the supporting structure (7) suspended in pendulum fashion comprise a laser light source (11) and optical beam splitters (13).

## Revendications

1. Suspension pour un dispositif de mesure commandé par gravité (6), comprenant une structure porteuse (7) suspendue avec une capacité d'oscillation pendulaire dans au moins une direction latérale et destinée à un système de mesure et/ou à un agencement optique, la suspension (16) comportant au moins une articulation conformée en charnière-film (21 ; 40), **caractérisée en ce que** la charnière-film (21 ; 40) comprend une matière thermoplastique, respectivement une matière plastique composite à propriétés caoutchouteuses, la charnière-film (21 ; 40) possédant dans la zone d'articulation (23 ; 41) une épaisseur de paroi (t) comprise entre environ 5 µm et environ 400 µm, et la zone d'articulation (23 ; 41) de la charnière-film (21 ; 40) présente une extension longitudinale (1) inférieure à 3 mm.

2. Suspension selon la revendication 1, **caractérisée en ce que** la charnière-film (40) est composée de plusieurs parties, une portion en bande (41) à faible épaisseur de paroi (t) étant entourée des deux côtés de la zone d'articulation par des portions de matière de même type ou de type différent (42, 43) qui servent de zones de suspension, respectivement de liaison.

3. Suspension selon une des revendications précédentes, **caractérisée en ce que** la charnière-film (21) est munie de pistes conductives et/ou de fils conducteurs (18) qui servent à alimenter en énergie des dispositifs disposés sur la structure porteuse à suspension pendulaire (7) et/ou qui servent de lignes de signaux.

4. Suspension selon une des revendications précédentes, **caractérisée en ce qu'**elle comprend deux charnières-film (21, 22) qui sont disposées en série et dont les zones d'articulation (23) sont tournées de 90° l'une par rapport à l'autre.

5. Suspension selon la revendication 4, **caractérisée en ce que** les deux charnières-film disposées en série sont conçues d'un seul tenant.

6. Suspension selon la revendication 1, **caractérisée en ce qu'**elle comprend au moins deux structures en cadre disposées en série qui sont reliées entre elles de manière articulée par l'intermédiaire d'au moins une charnière-film.

7. Suspension selon la revendication 6, **caractérisée en ce qu'**elle comprend trois structures en cadre (31, 32, 33) disposées en série, les structures en cadre voisines (31, 32 respectivement, 32, 33) étant reliées entre elles deux à deux de manière articulée par l'intermédiaire de charnières-film (34, respectivement 35), et la liaison articulée (34) des première et deuxième structures en cadre (31, 32) étant décalée de 90° par rapport à la liaison articulée (35) des deuxième et troisième structures en cadre (32, 33).

8. Suspension selon la revendication 6 ou 7, **caractérisée en ce que** les structures en cadre reliées entre elles de manière articulée (31, 32, 33, 34, 35) sont réalisées par moulage, de préférence par moulage par injection, sous la forme d'une pièce en matière plastique.

9. Suspension selon une des revendications précédentes, **caractérisée en ce qu'**elle fait partie d'un système de mise de niveau pour un dispositif indicateur laser multiaxial qui émet au moins deux faisceaux laser perpendiculaires entre eux, les dispositifs montés sur la structure porteuse à suspension pendulaire (7) comprenant une source de lumière laser (11) et un séparateur optique de faisceaux (13).
